# EUROPÄISCHE PATENTSCHRIFT

(11) **EP 1 296 560 B1**
(45) Veröffentlichungstag und Bekanntmachung des Hinweises auf die Patenterteilung: **19.05.2004**
(21) Anmeldenummer: 01953648.1
(22) Anmeldetag: 03.07.2001
(51) Int. Cl.: A21C 11/14

(54) **VORRICHTUNG ZUR MECHANISCHEN BEARBEITUNG DER OBERFLÄCHE EINES TEIGSTÜCKES**
DEVICE FOR MECHANICALLY PROCESSING THE SURFACE OF A PIECE OF DOUGH
DISPOSITIF DE TRAITEMENT MECANIQUE DE LA SURFACE D'UN MORCEAU DE PATE

(30) Priorität: 05.07.2000 AT 11562000
(43) Veröffentlichungstag der Anmeldung: 02.04.2003
(73) Patentinhaber: König Maschinen Gesellschaft mbH, 8045 Graz (AT)
(72) Erfinder: BARROCHE-HEINRICH, Wilfried, A-8181 Mitterdorf/Raab (AT); LAMBAUER, Peter, A-8073 Feldkirchen (AT)
(74) Vertreter: Wildhack, Helmut, Dr. Dipl.-Ing.
(86) Internationale Anmeldenummer: PCT/AT2001/000218
(87) Internationale Veröffentlichungsnummer: WO 2002/007521

(56) Entgegenhaltungen:
- DE-A- 1 811 392
- DE-C- 216 968
- DE-C- 278 253
- DE-C- 286 941
- DE-C- 601 059
- DE-U- 29 713 287

## Beschreibung

Die Erfindung bezieht sich auf eine Vorrichtung zur mechanischen Bearbeitung der Oberfläche eines Teigstückes, mit einer Drucktasse, die mit zumindest einer Mulde zur Aufnahme des zu bearbeitenden Teigstückes versehen ist, das von einer Eingabevorrichtung an einer Eingabestelle in die Mulde eingelegt und von einem in einem Gestell auf und ab bewegbaren Werkzeug an einer zur Eingabestelle räumlich versetzten Bearbeitungsstelle in der Mulde bearbeitet wird, und mit einer Auflage, auf welche das bearbeitete Teigstück an einer Abgabestelle von der Drucktasse abgelegt wird, bei welcher Ablegung die an einem von der Eingabevorrichtung getrennten Drucktassenträger um ihre Längsachse verdrehbar gelagerte Drucktasse an der Abgabestelle verdreht wird und die Drucktasse mittels des Drucktassenträgers zwischen der Eingabestelle und der Bearbeitungsstelle hin und her verlagerbar ist.

Zahlreiche Brötchensorten erfordern eine mechanische Bearbeitung der Deckfläche eines Teigstückes. Beispiele hiefür sind die Stüpfelung von Kaiser- oder Stemsemmeln, die Einarbeitung von Schnitten in Schnittbrötchen, aber auch eine Impfung des Teigstückes usw. Hiefür sind zahlreiche Vorrichtungen bekannt. Stets wird für die Bearbeitung ein vertikal bewegbarer Werkzeugträger verwendet, unter welchem eine die Teigstücke tragende Auflage angeordnet ist. Diese Auflage kann ein Transportsystem sein, an welchem mehrere Drucktassen fix oder austauschbar befestigt sind. Eine Variante hiezu besteht darin, die Drucktassen drehbar am Transportsystem zu befestigen (sogenannte Wendedrucktassen), wobei die Drucktassen zwei- oder mehrseitig ausgeführt sind und jede Seite unterschiedliche Drucktassenformen aufweist. Es ist auch bekannt, drehbare, mehrseitige Drucktassen mit an jeder Seite gleichen Drucktassenformen unter dem Werkzeugträger anzuordnen. Weiters ist es bekannt, die die Teigstücke tragenden Auflagen als Gärgutträger (z.B. Kipptrögel) auszubilden. Letztlich ist es bekannt, eine Stüpfelung von Teigstücken durchzuführen, die von einem Transportband getragen sind.

Jene Vorrichtungen, welche eine Drucktassenkette verwenden, haben den Nachteil eines hohen Aufwandes und eines großen Platzbedarfes. Die große Drucktassenzahl macht auch die Reinigung aufwendig. Eine Stüpfelung in Kipptrögeln, Gärschrankgehängen oder gar auf einem Transportband ist unzuverlässig im Ergebnis, da die Teigstücke nicht völlig sicher beim Stüpfelvorgang gehalten werden. Außerdem stellt sich aufgrund des ständig steigenden Brötchensortiments der Wunsch, Teigstücke in unterschiedlicher Weise bearbeiten zu können, also die Vorrichtung variabel im Hinblick auf den durchzuführenden Bearbeitungsvorgang auszubilden. Diesem Wunsch tragen die bekannten Vorrichtungen nicht oder nur mit einem hohen Aufwand Rechnung. Dies gilt auch für eine bekannte Vorrichtung der eingangs geschilderten Art (DE 18 11 392 A), bei welcher die Teigstücke mittels einer als zangenartige Hebevorrichtung ausgebildeten Eingabevorrichtung von einem Kipptrögelapparat abgehoben und in einen darüber angeordneten Wirknapf eingelegt werden. Nach der Wirkung des Teigstückes wird dieser Wirknapf abgesenkt und schließlich gekippt, sodass das Teigstück wieder auf den Kipptrögelapparat zurückgelangt. Als zusätzlicher Nachteil tritt hier die zangenartige Erfassung des Teigstückes auf, da das Teigstück entweder nur unzuverlässig gehalten oder aber seitlich verquetscht wird, insbesondere bei weichen Teigen.

Die Erfindung setzt sich zur Aufgabe, eine Vorrichtung der eingangs beschriebenen Art so auszubilden, dass der konstruktive und räumliche Aufwand gering gehalten wird, sodass an Kosten für die Anschaffung und Wartung der Vorrichtung gespart wird. Außerdem soll die Möglichkeit gegeben sein, die Vorrichtung leicht an unterschiedliche Brötchensorten anpassen zu können, und es soll eine schonende Behandlung des Teigstückes in der Vorrichtung möglich sein.

Die Erfindung löst diese Aufgabe dadurch, dass die Abgabestelle im Bereich dieser Hin- und Herbewegung liegt. Das von der Eingabevorrichtung an der Eingabestelle in die Mulde der Drucktasse eingelegte Teigstück wird von der Drucktasse nach der Belegung an die Bearbeitungsstelle transportiert, wo mittels des Werkzeuges die gewünschte mechanische Bearbeitung der Teigstückoberfläche erfolgt, z.B. eine Stüpfelung oder die Vomahme von Einschnitten, eine Impfung usw. Sobald diese Bearbeitung vollendet ist, bewegt der Drucktassenträger die Drucktasse wieder zur Eingabestelle zurück. Über diese Rückbewegungsstrecke erfolgt die Ablage des bearbeiteten Teigstückes auf die Auflage durch Verdrehung der Drucktasse um ihre Längsachse. Diese Verdrehung kann noch an der Bearbeitungsstelle erfolgen, also vor Einsetzen der Rückbewegung des Drucktassenträgers, sie kann jedoch auch erst an der Eingabestelle erfolgen, wobei lediglich darauf zu achten ist, dass die Belegung durch das nachfolgende, noch unbearbeitete Teigstück die Ablage des schon bearbeiteten Teigstückes nicht stört. Ebenso kann natürlich die Ablage des bearbeiteten Teigstückes an jeder beliebigen Stelle zwischen den beiden erwähnten Positionen erfolgen. Dies macht die Vorrichtung sehr flexibel in Hinblick auf den Zusammenbau mit vor- oder nachgeschalteten Vorrichtungen. Während z.B. bei einer bekannten Vorrichtung die Drucktassen eine endlose Drucktassenkette bilden und sich daher stets in der gleichen Richtung bewegen, sodass die Ablagestelle stets in dieser Richtung relativ zur Eingabestelle und zur Bearbeitungsstelle versetzt sein muss, ist beim Erfindungsgegenstand die Möglichkeit gegeben, die zu bearbeitenden Teigstücke in beliebiger Richtung zur Drucktasse zuzuführen und ebenso in beliebiger Richtung von der Abgabestelle wieder abzuführen. Dadurch lässt sich an Platz sparen, der nicht immer und überall unbegrenzt zur Verfügung steht. Außerdem lässt sich Art und Weise des Abwurfes des bearbeiteten Teigstückes von der Drucktasse auf die Auflage durch entsprechende Steuerung der Bewegung der Drucktasse beeinflussen, was bei einer schrittweise umlaufenden Drucktassenkette nicht möglich ist. Der verringerte Aufwand der erfindungsgemäßen Konstruktion (es ist im Prinzip nur eine einzige Drucktasse erforderlich) im Vergleich zu einer Konstruktion mit einer Drucktassenkette ist offensichtlich.

Besonders vorteilhaft ist es beim Erfindungsgegenstand, dass das zugeführte Teigstück nicht angehoben werden muss, um es in die Mulde einzulegen, sondern es kann die Eingabevorrichtung zugleich auch zur Zufuhr des Teigstückes dienen. Besonders geeignet hierfür sind Förderbänder oder eine Gehängetassenkette oder ein Abziehband, wobei in allen diesen Fällen das Teigstück durch entsprechende Bewegung der Eingabevorrichtung in die unmittelbar darunter befindliche Mulde fallen gelassen werden kann und somit schonend in die Mulde gelangt.

Die Hin- und Herbewegung der Drucktasse kann geradlinig erfolgen, z.B. durch Verschiebung entlang einer Führungsbahn. Günstiger ist es jedoch im Rahmen der Erfindung, wenn der Drucktassenträger von einem im Gestell um eine horizontale Achse schwenkbar gelagerten Schwenkhebel gebildet ist, der an seinem einen Ende die Drucktasse gelagert trägt und an seinem anderen Ende zu einer Hin- und Herschwenkung um die horizontale Achse angetrieben ist. Dies ergibt eine einfache Konstruktion bei geringem Aufwand und ermöglicht es, in einfacher Weise, den Bereich der Verlagerung der Drucktasse und somit auch den Ort der Eingabestelle, der Bearbeitungsstelle und der Abgabestelle zu verändern, z.B. durch Verstellung der Anlenkstelle des Schwenkhebels am Gestell und/oder durch Veränderung der wirksamen Länge eines oder beider Arme des Schwenkhebels. Die Bewegung des Schwenkhebels erfolgt gemäß einer bevorzugten Ausführungsform durch gelenkige Befestigung des unteren Endes des Schwenkhebels am einen Ende einer Lasche, deren anderes Ende mit einem durch einen am Gestell befestigten Motor angetriebenen Exzenterzapfen gelenkig verbunden ist.

Die Verdrehung der Drucktasse um ihre Längsachse erfolgt zweckmäßig durch einen Motor, der gemäß einer bevorzugten Ausführungsform der Erfindung ebenfalls vom Drucktassenträger getragen ist. Dies ist wesentlich günstiger als die Anordnung des Motors am Gestell, da in letzterem Fall eine aufwendige Kinematik zur Einleitung der Drehbewegung auf die Drucktasse erforderlich wäre. Zweckmäßig ist hiebei im Rahmen der Erfindung die Abtriebswelle des Motors koaxial zur Drehachse der Drucktasse angeordnet, gegebenenfalls über ein Getriebe. Der dadurch erzielte unmittelbare Antrieb der Drehachse der Drucktasse erspart zwischen Motorabtriebswelle und dieser Drehachse eingeschaltete Übertragungsglieder.

Gemäß einer Weiterbildung der Erfindung weist die Drucktasse mehr als eine Mulde auf, wobei die Mulden in Umfangsrichtung der Drucktasse relativ zueinander versetzt angeordnet sind, vorzugsweise um gleiche Winkel. Dies ermöglicht es, das zu bearbeitende Teigstück etwa zeitgleich mit der Ablegung des bearbeiteten Teigstückes aus seiner Mulde in die in Drehrichtung der Drucktasse nächstfolgende Mulde einzulegen, sodass die Eingabeposition und die Abgabeposition zumindest annähernd an derselben Stelle angeordnet sein können. Besonders günstige Verhältnisse ergeben sich, wenn drei Mulden in Umfangsrichtung der Drucktasse verteilt angeordnet sind, wobei diese Mulden gleiche Form und Größe aufweisen können, aber nicht müssen. Es besteht nämlich durchaus die Möglichkeit, die Mulden mit unterschiedlicher Form und/oder Größe auszubilden, um die Bearbeitung unterschiedlicher Teigstücksorten zu ermöglichen. Beispielsweise kann dann die Stüpfelung von Kaisersemmeln in der ersten Mulde durchgeführt werden, die Stüpfelung von Sternsemmeln unter Verwendung der zweiten Mulde und die Einarbeitung von Schnitten in Teiglinge für Schnittbrötchen unter Verwendung der dritten Mulde.

Für größere Anlagen empfiehlt es sich, dass die Drucktasse in ihrer Längsrichtung verlaufende Reihen von Mulden trägt, wobei es zweckmäßig ist, die Mulden jeder Reihe untereinander gleich auszubilden.

Wie erwähnt, ist es aufgrund des ständig steigenden Brötchensortimentes erwünscht, eine hohe Variationsmöglichkeit der Vorrichtung zu erzielen. Die Erfindung gibt hiezu in einfacher Weise die Möglichkeit, die Drucktasse als leicht austauschbaren Bauteil auszubilden, wobei die einzelnen Drucktassen mit Mulden unterschiedlicher Form und/oder Größe ausgebildet sind. Ebenso besteht im Rahmen der Erfindung die Möglichkeit, mehrere voneinander unterschiedliche Werkzeuge an einem gemeinsamen Werkzeugträger zu montieren, z.B. an einem Revolverkopf, wobei nur das jeweils gewünschte Werkzeug in eine Arbeitsposition gebracht wird. Die Variationsbreite lässt sich dann noch weiter dadurch steigern, dass jedes Werkzeug einen leicht austauschbaren Bauteil bildet, sodass für jede Werkzeugaufnahme eine Vielzahl von untereinander unterschiedlichen Werkzeugen zur Verfügung steht.

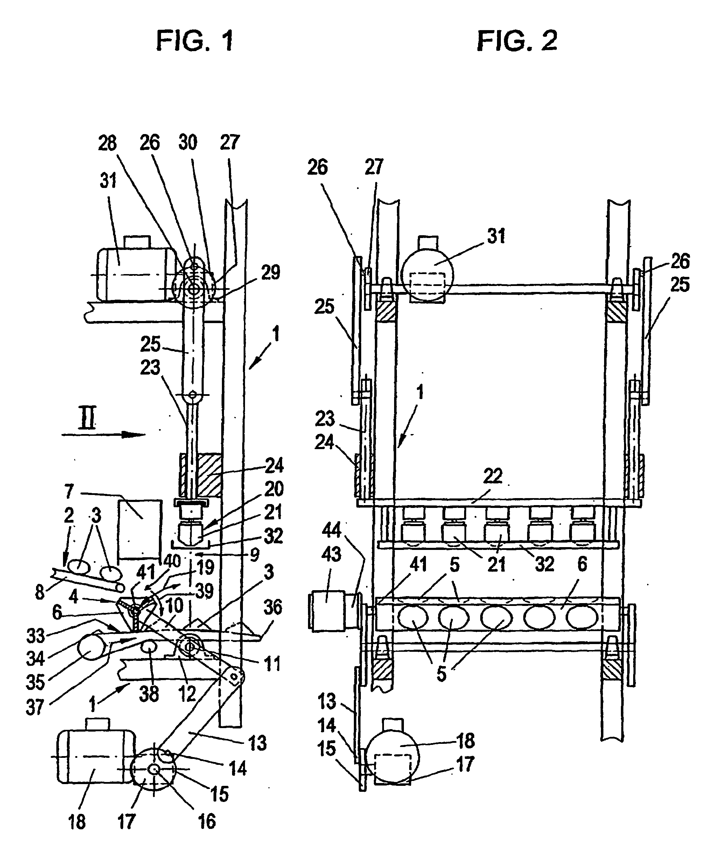

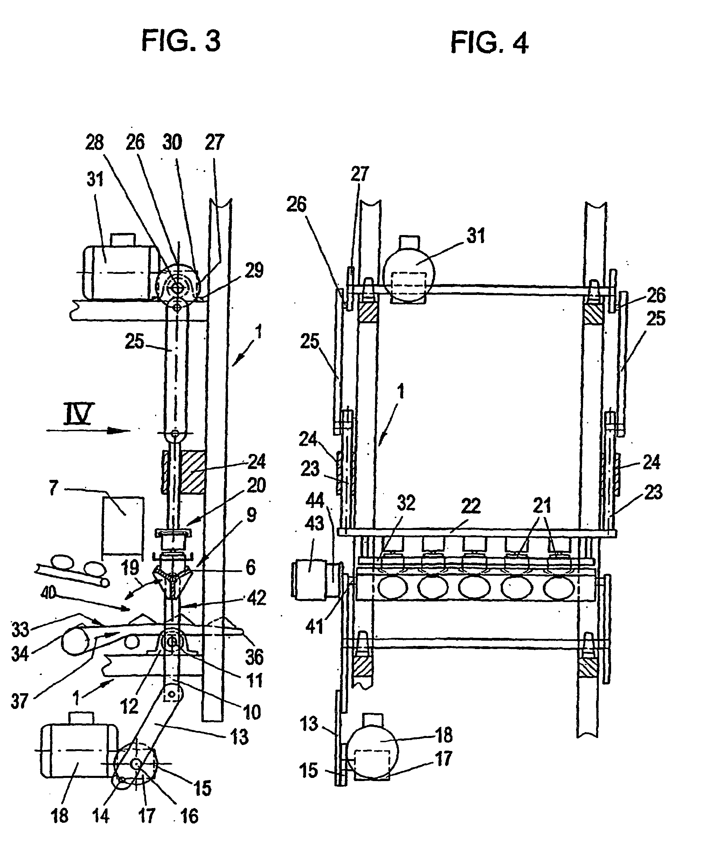

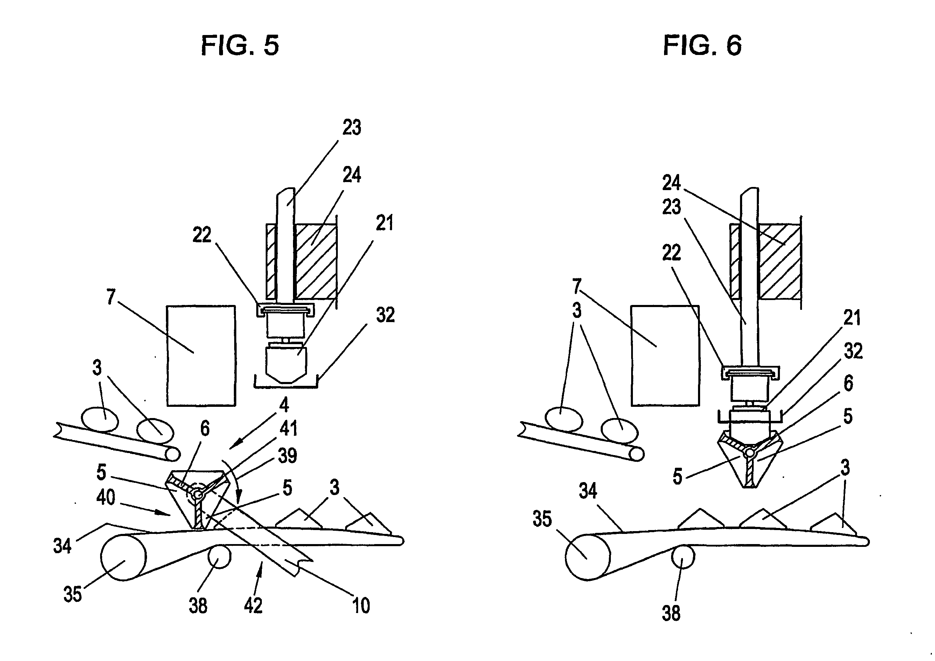

Weitere Kennzeichen und Vorteile der Erfindung ergeben sich aus der Beschreibung eines Ausführungsbeispieles, welches in der Zeichnung schematisch dargestellt ist. Fig. 1 zeigt die Vorrichtung in Seitenansicht, und zwar mit der Drucktasse in der Eingabeposition. Fig. 2 ist eine Ansicht in Richtung des Pfeiles II der Fig. 1. Fig. 3 zeigt eine Seitenansicht ähnlich Fig. 1, jedoch mit der Drucktasse in der Bearbeitungsposition. Fig. 4 ist eine Ansicht in Richtung des Pfeiles IV der Fig. 3. Fig. V zeigt in größerem Maßstab die Verhältnisse an der Eingabestelle mit in Eingabeposition befindlicher Drucktasse, während Fig. 6, ebenfalls in größerem Maßstab, die Verhältnisse zeigt, wenn sich die Drucktasse in der Bearbeitungsposition befindet.

Die Vorrichtung hat ein nur teilweise dargestelltes Gestell 1, in welchem eine Eingabevorrichtung 2 angeordnet ist, welche die zweckmäßig leicht vorgegarten Teigstücke 3 einer Eingabestelle 4 zuführt, an welcher Teigstück für Teigstück in eine Mulde 5 (Fig. 2) einer Drucktasse 6 eingelegt werden. Zweckmäßig ist die Eingabevorrichtung 2 von einem endlosen Förderband 8 gebildet, es kann die Eingabevorrichtung 2 aber auch etwa von einer Gehängetassenkette oder einem Abziehband od.dgl. gebildet sein. Wie ersichtlich, liegt das Abgabeende der Eingabevorrichtung 2 knapp oberhalb der in der Eingabestelle 4 befindlichen Drucktasse 6, sodass das jeweilige Teigstück schonend von der Eingabevorrichtung 2 in die darunter befindliche Drucktasse 6 fallen gelassen wird. Die Zufuhr der Teigstücke 3 kann schrittweise oder kontinuierlich erfolgen. Unmittelbar über der Eingabestelle 4 ist eine Bestaubungsvorrichtung 7 angeordnet, welche die Mulde 5 der Drucktasse 6 vor der Belegung mit dem Teigstück 3 bzw. das Teigstück 3 nach dessen Eingabe in die Mulde 5 an der Oberseite bemehlt. Diese Bemehlung der Tasse bzw. des Teigstückes ist abhängig vom gewünschten Backprodukt mengenregulierbar. Die Bemehlung kann entfallen, falls für die Formgebung des Teigstückes kein Mehl notwendig ist.

Zweckmäßig ist die Drucktasse 6 langgestreckt und über ihre Länge mit mehreren untereinander gleich ausgebildeten Mulden 5 versehen (Fig. 2), im dargestellten Ausführungsbeispiel fünf Mulden. In analoger Weise werden von der Eingabevorrichtung 2 die Teigstücke 3 in Reihen zu je fünf Stück zugeführt.

Sobald die Teigstücke in die gegebenenfalls bemehlten Mulden 5 eingelegt sind, wird die Drucktasse 6 in die Bearbeitungsstelle 9 (Fig. 3, 4, 6) verschwenkt. Hiezu ist die Drucktasse 6 am einen Ende eines Doppelhebels 10 befestigt, der im Bereich seiner Mitte um eine Achse 11 schwenkbar gelagert ist, die in einem Lagerblock 12 des Gestelles 1 angeordnet ist. Das andere Ende des Doppelhebels 10 ist gelenkig mit dem einen Ende einer Lasche 13 verbunden, deren anderes Ende gelenkig mit einem Exzenterzapfen 14 verbunden ist. Dieser Exzenterzapfen 14 sitzt exzentrisch auf einer Scheibe 15, die auf einer Welle 16 montiert ist, die über ein regelbares Getriebe 17 von einem Motor 18 zur Drehbewegung angetrieben wird. Die Verschwenkung der Drucktasse 6 aus der Eingabeposition (Fig. 1, 5) in die Bearbeitungsposition (Fig. 3, 6) erfolgt somit im Uhrzeigersinn im Richtung des Doppelpfeiles 19 um die Achse 11 und zwar so lange, bis die Drucktasse 6 sich unterhalb eines Werkzeuges 20 befindet, welches an der Bearbeitungsstelle 9 auf und ab beweglich angeordnet ist. Im dargestellten Ausführungsbeispiel ist das Werkzeug 20 von einem Stüpfelkopf 21 pro Mulde 5 der Drucktasse 6 gebildet. Jeder Stüpfelkopf ist leicht austauschbar an einer Werkzeugaufnahme 22 befestigt, die vertikal im Gestellt 1 verfahrbar ist. Hiezu ist die Werkzeugaufnahme 22 an zwei Stangen 23 befestigt, deren jede in einer Gleitführung 24 des Gestelles 1 vertikal verschiebbar ist. Jede Stange 23 ist an ihrem oberen Ende gelenkig mit dem einen Ende einer Zuglasche 25 verbunden, deren anderes Ende gelenkig mit einem Exzenterzapfen 26 verbunden ist, der exzentrisch auf einer Scheibe 27 sitzt, die auf einer Welle 28 befestigt ist. Die Welle 28 ist in einem Lagerbock 29 des Gestelles 1 drehbar gelagert und wird zur Drehbewegung über ein regelbares Getriebe 30 von einem Motor 31 angetrieben.

In der Bearbeitungsposition verweilt die Drucktasse 6 durch entsprechende Stillsetzung des Motors 18 so lange, bis der Bearbeitungsvorgang abgeschlossen ist. Bei diesem Bearbeitungsvorgang, im dargestellten Ausführungsbeispiel ein Stüpfelvorgang, z.B. für Kaisersemmeln, werden die Werkzeuge 20 durch entsprechende Ansteuerung des Motors 31 vertikal nach unten verlagert, sobald die Drucktasse 6 die Bearbeitungsposition erreicht hat. Das Bearbeitungswerkzeug, im dargestellten Ausführungsbeispiel die Stüpfelköpfe 21, drücken nun ihr Muster in die in den Mulden 5 befindlichen Teigstücke. Die unterste Stellung der Werkzeuge 20 ist in den Fig. 3 und 6 dargestellt. Sie entspricht der am weitesten unten liegenden Stellung des Exzenterzapfens 26. Sodann werden durch die Aufwärtsbewegung des Exzenterzapfens 26 die Zugstangen 23 und die mit ihr verbundene Werkzeugaufnahme 22 wieder angehoben, die Teigstücke bleiben in den Mulden 5 der Drucktasse 6 jedoch liegen. Dies kann durch einen Abstreifer 32 unterstützt werden.

Sobald die Bearbeitung der Teigstücke 3 abgeschlossen ist, und die Werkzeuge 20 genügend angehoben sind, wird der Motor 18 wieder angesteuert, sodass er den Schwenkhebel 10 so verschwenkt, dass die Drucktasse 6 wieder in Richtung des Doppelpfeiles 19 zur Eingabevorrichtung 2 zurückgeführt wird. Sobald die Position ah der Eingabestelle 4 erreicht ist, oder schon während des Transportes von der Bearbeitungsstelle 9 zur Eingabestelle 4, werden die Teigstücke 3 aus den Mulden 5 der Drucktasse 6 ausgeworfen und gelangen dadurch auf eine Auflage 33, welche im dargestellten Ausführungsbeispiel von einem endlosen Förderband 34 gebildet ist, das über eine Umlenkrolle 35 und eine Ablegekante 36 geführt ist und in Richtung des Pfeiles 37 umläuft. Zusätzlich kann eine Spannrolle 38 vorgesehen sein. Diese Ablage der Teigstücke erfolgt dadurch, dass die Drucktasse um ihre Längsachse verdreht bzw. gekippt wird, sodass die Teigstücke aus den Mulden 5 auf das darunter befindliche Förderband 34 fallen. Dieses Förderband ist, wie ersichtlich, als Übergabeband ausgebildet, es kann sich schrittweise oder kontinuierlich bewegen. Im dargestellten Ausführungsbeispiel werden die Teigstücke 3 nach rechts abtransportiert, es kann jedoch die Richtung des Abtransportes auch nach links erfolgen, wenn das Förderband 34 entsprechend angetrieben und angeordnet ist. Man ist also hinsichtlich des Transportes der Teigstücke konstruktiv frei. Statt eines Förderbandes 34 als Auflage könnte diese auch von einem Abziehband, einem Gärgutträger, Backblechen od.dgl., gebildet sein.

Wie ersichtlich, hat die Drucktasse 6 drei Reihen von Mulden 5, die gegeneinander um 120° versetzt sind. Wenn also die zuvor bearbeiteten Teigstücke aus einer Muldenreihe durch Verdrehung der Drucktasse 6 in Richtung des Pfeiles 39 abgeworfen werden (Fig. 5), kann zugleich die Belegung der nächsten Muldenreihe mittels der Eingabevorrichtung 2 erfolgen, wenn die Abgabestelle 40 (Fig. 5) mit der Eingabestelle 4 zusammenfällt. Es kann jedoch, wie bereits erwähnt, die Ablage der Teigstücke durch Verdrehung der Drucktasse 6 im gesamten Bereich zwischen Bearbeitungsstelle 9 und Eingabestelle 4 erfolgen. Die Abgabestelle 40 liegt daher zwischen der Bearbeitungsstelle 9 und der Eingabestelle 4, diese beiden Positionen mit eingeschlossen.

Die Drucktasse 6 ist um eine Achse 41 drehbar am vom Doppelhebel 10 gebildeten Drucktassenträger 42 befestigt. Dieser Drucktassenträger 10 trägt zugleich einen Motor 43 mit regelbarem Getriebe 44 (Fig. 2, 4), dessen Abtriebswelle mit der Achse 41 zusammenfällt. Der Motor 43 wird zum geeigneten Zeitpunkt für die erforderliche Drehbewegung der Drucktasse 6 von einer nicht dargestellten Steuereinrichtung angespeist, welche Steuereinrichtung auch zur Anspeisung der Motoren 18, 31, dient.

Die Drucktasse 6 muss nicht drei Reihen von Mulden 5 tragen, es genügen auch nur zwei solche Reihen. Gegebenenfalls kann auch mit einer einzigen Reihe von Mulden 5 das Auslangen gefunden werden, wenn die Drucktasse 6 nach Beendigung des Stüpfelvorganges od.dgl. zunächst zur Ablage der fertig bearbeiteten Teigstücke verdreht und dann in die Eingabestellung wieder zurückgedreht oder weitergedreht wird.

Die Verdrehung der Drucktasse 6 muss nicht im Uhrzeigersinn (Pfeil 39) erfolgen, eine Drehung entgegen dem Uhrzeigersinn ist bei der dargestellten Lage der Drucktasse 6 in ihrer Abgabeposition knapp oberhalb des Förderbandes 34 ebenso gut möglich, wenn das Förderband 34 nach links bewegt wird. Die Bewegungsrichtung des Förderbandes 34 ist belanglos, wenn die Abgabestellung der Drucktasse 6 so weit oberhalb des oberen Trums des Förderbandes 34 liegt, das die Teigstücke 3 unterhalb der Drucktasse 6 durchlaufen können. Im allgemeinen ist jedoch eine geringe Fallhöhe der Teigstücke erwünscht, um unerwünschte Verformungen der Teigstücke zu vermeiden.

Im einfachsten Fall kann die Werkzeugaufnahme 22 eine Trägerplatte sein, an welcher ein oder mehrere Werkzeuge 20 fix montiert sind oder an der austauschbare Werkzeuge angebracht werden können, sodass von einer Bearbeitungsart auf eine andere Bearbeitungsart durch bloßen Austausch der Werkzeuge übergegangen werden kann. Geeignete Aufnahmen mit Schnellkupplungen od.dgl. stehen zur Verfügung. Es kann auch die Werkzeugaufnahme von einem drehbaren Revolverkopf gebildet sein, welcher mehrere fix montierte Werkzeuge, die nach verschiedenen Richtungen zeigen, trägt, oder ebenfalls austauschbar montierte Werkzeuge.

Die Variationsmöglichkeiten bezüglich der Bearbeitung der Teigstücke lassen sich dadurch steigern, dass die an der Drucktasse 6 angeordneten Mulden unterschiedliche Form und bzw. oder Größe haben, wobei jedoch zweckmäßig für jede Reihe die Mulden untereinander gleich sind. Ebenso ist es möglich, dass die Drucktasse 6 einen leicht austauschbaren Bauteil bildet, etwa durch Ausbildung der Achsen 41, mit welchen die Drucktasse 6 am Drucktassenträger 42 angelenkt ist, mit Schnellkupplungen.

Auch die Bemehlungsvorrichtung 7 kann im Takt der Belegung der Mulden 5 der Drucktasse 6 zur Abgabe von Mehl angetrieben sein, z.B. durch eine in der Bestaubungsvorrichtung 7 angeordnete umlaufende Bürste.

Der Drucktassenträger 42 muss nicht von einem Schwenkhebel gebildet sein, denn es kann die Drucktasse 6 zwischen ihren einzelnen Positionen (Eingabestelle 4, Bearbeitungsstelle 9, Abgabestelle 40) auch durch einen geeigneten Antrieb entlang einer Führung des Gestelles 1 bewegt werden, auch translatorisch, also geradlinig. Ebenso ist es möglich, einen den Drucktassenträger 42 bildenden Schwenkhebel mittels einer Rolle an einer Kurvenbahn zu führen und die dadurch hervorgerufene Bewegung des Schwenkhebels auch für die Bewegung des Werkzeugträgers 22 durch eine mechanische Kupplung auszunutzen.

## Patentansprüche

1. Vorrichtung zur mechanischen Bearbeitung der Oberfläche eines Teigstückes, mit einer Drucktasse (6), die mit zumindest einer Mulde (5) zur Aufnahme des zu bearbeitenden Teigstückes (3) versehen ist, das von einer Eingabevorrichtung (2) an einer Eingabestelle (4) in die Mulde (5) eingelegt und von einem in einem Gestell (1) auf und ab bewegbaren Werkzeug (20) an einer zur Eingabestelle (4) räumlich versetzten Bearbeitungsstelle (9) in der Mulde (5) bearbeitet wird, und mit einer Auflage (33), auf welche das bearbeitete Teigstück (3) an einer Abgabestelle (40) von der Drucktasse (6) abgelegt wird, bei welcher Ablegung die an einem von der Eingabevorrichtung (2) getrennten Drucktassenträger (42) um ihre Längsachse (41) verdrehbar gelagerte Drucktasse (6) an der Abgabestelle (40) verdreht wird und die Drucktasse (6) mittels des Drucktassenträgers (42) zwischen der Eingabestelle (4) und der Bearbeitungsstelle (9) hin und her verlagerbar ist, **dadurch gekennzeichnet, dass** die Abgabestelle (40) im Bereich dieser Hin- und Herbewegung liegt.

2. Vorrichtung nach Anspruch 1, **dadurch gekennzeichnet, dass** die Eingabevorrichtung (2) von einem Förderband (8) oder einer Gehängetassenkette oder einem Abziehband gebildet ist.

3. Vorrichtung nach Anspruch 1 oder 2, **dadurch gekennzeichnet, dass** der Drucktassenträger (42) von einem im Gestell (1) um eine horizontale Achse (11) schwenkbar gelagerten Schwenkhebel (10) gebildet ist, der an seinem einen Ende die Drucktasse (6) gelagert trägt und an seinem anderen Ende zu einer Hin- und Herschwenkung um die horizontale Achse (11) angetrieben ist.

4. Vorrichtung nach Anspruch 3, **dadurch gekennzeichnet, dass** das untere Ende des Schwenkhebels (10) gelenkig am einen Ende einer Lasche (13) befestigt ist, deren anderes Ende mit einem durch einen am Gestell (1) befestigten Motor (18) angetriebenen Exzenterzapfen (14) gelenkig verbunden ist.

5. Vorrichtung nach einem der Ansprüche 1 bis 4, **dadurch gekennzeichnet, dass** der Drucktassenträger (42) auch einen Motor (43) zur Verdrehung der Drucktasse (6) trägt.

6. Vorrichtung nach Anspruch 5, **dadurch gekennzeichnet, dass** die Abtriebswelle des Motors (43) koaxial zur Drehachse (41) der Drucktasse (6) angeordnet ist, gegebenenfalls über ein Getriebe (44).

7. Vorrichtung nach einem der Ansprüche 1 bis 6, **dadurch gekennzeichnet, dass** die Drucktasse (6) mehr als eine Mulde (5) aufweist, wobei die Mulden in Umfangsrichtung der Drucktasse (6) relativ zueinander versetzt angeordnet sind, vorzugsweise um gleiche Winkel.

8. Vorrichtung nach Anspruch 7, **dadurch gekennzeichnet, dass** die Mulden (5) unterschiedliche Form und bzw. oder Größe haben.

9. Vorrichtung nach einem der Ansprüche 1 bis 8, **dadurch gekennzeichnet, dass** die Drucktasse (6) in ihrer Längsrichtung verlaufende Reihen von Mulden (5) trägt.

10. Vorrichtung nach einem der Ansprüche 1 bis 9, **dadurch gekennzeichnet, dass** die Drucktasse (6) einen leicht austauschbaren Bauteil bildet.

11. Vorrichtung nach einem der Ansprüche 1 bis 10, **dadurch gekennzeichnet, dass** mehrere voneinander unterschiedliche Werkzeuge an einer gemeinsamen Werkzeugaufnahme (22) montiert sind, z.B. an einem Revolverkopf.

12. Vorrichtung nach einem der Ansprüche 1 bis 11, **dadurch gekennzeichnet, dass** jedes Werkzeug einen leicht austauschbaren Bauteil bildet.

## Claims

1. A device for mechanically processing the surface of a piece of dough, having a pressure cup (6) which is provided with at least one depression (5) for receiving the piece of dough (3) to be processed, said piece of dough being placed in the depression (5) at a feed point (4) by a feed device (2) and being processed in the depression (5) at a processing point (9) spatially offset from the feed point (4) by a tool (20) which may be moved up and down in a frame (1), and having a support (33) onto which the processed piece of dough (3) is deposited from the pressure cup (6) at a delivery point (40), the pressure cup (6), which is mounted on a pressure-cup carrier (42) separated from the feed device (2) such that it is rotatable about its longitudinal axis (41), being rotated at the delivery point (40) during the depositing action and the pressure cup (6) being displaceable back and forth between the feed point (4) and the processing point (9) by means of the pressure-cup carrier (42), **characterised in that** the delivery point (40) is within the range of this back and forth movement.

2. A device according to Claim 1, **characterised in that** the feed device (2) is formed by a conveyor belt (8) or a hanging-cup chain or a discharging belt.

3. A device according to Claim 1 or 2, **characterised in that** the pressure-cup carrier (42) is formed by a pivot lever (10), which is mounted in the frame (1) such that it is pivotable about a horizontal axis (11) and carries the pressure cup (6) mounted at its one end and is driven at its other end such that it pivots back and forth about the horizontal axis (11).

4. A device according to Claim 3, **characterised in that** the lower end of the pivot lever (10) is fixed in articulated manner to one end of a connecting plate (13), whereof the other end is connected in articulated manner to an eccentric pin (14) driven by a motor (18) fixed to the frame (1).

5. A device according to one of Claims 1 to 4, **characterised in that** the pressure-cup carrier (42) also carries a motor (43) for rotating the pressure cup (6).

6. A device according to Claim 5, **characterised in that** the drive shaft of the motor (43) is arranged coaxially to the axis of rotation (41) of the pressure cup (6), possibly by way of a gear (44).

7. A device according to one of Claims 1 to 6, **characterised in that** the pressure cup (6) has more than one depression (5), the depressions being arranged offset relative to one another in the circumferential direction of the pressure cup (6), preferably by the same angle.

8. A device according to Claim 7, **characterised in that** the depressions (5) have different shapes and/or sizes.

9. A device according to one of Claims 1 to 8, **characterised in that** the pressure cup (6) has rows of depressions (5) extending in its longitudinal direction.

10. A device according to one of Claims 1 to 9, **characterised in that** the pressure cup (6) constitutes an easily replaceable component.

11. A device according to one of Claims 1 to 10, **characterised in that** a plurality of mutually differing tools are mounted on a common tool holder (22), for example on a turret head.

12. A device according to one of Claims 1 to 11, **characterised in that** each tool constitutes an easily replaceable component.

## Revendications

1. Dispositif de traitement mécanique de la surface d'un morceau de pâte, comprenant un réceptacle de tassement (6) présentant au moins un évidement (5) destiné à recevoir le morceau de pâte à traiter (3), qui est introduit dans ledit évidement (5) par un dispositif d'alimentation (2) au niveau d'une position d'alimentation (4) et est traité dans l'évidement (5) par un outil (20) agencé dans un bâti (1) de manière à pouvoir se déplacer vers le haut et vers le bas au niveau d'une position de traitement (9) spatialement décalée par rapport à la position d'alimentation (4), et avec un support (33) sur lequel le morceau de pâte (3) traité est déposé au niveau d'une position de sortie (40) par le réceptacle de tassement (6), dépôt lors duquel le réceptacle de tassement (6), qui est monté rotatif autour de son axe longitudinal (41) sur un support de réceptacle de tassement (42) indépendant du dispositif d'alimentation (2), est entraîné en rotation au niveau de la position de sortie (40) et le réceptacle de tassement (6) peut être déplacé selon un mouvement de va-et-vient au moyen du support de réceptacle de tassement (42) entre la position d'alimentation (4) et la position de traitement (9), **caractérisé en ce que** la position de sortie (40) se situe dans la zone de ce mouvement de va-et-vient.

2. Dispositif selon la revendication 1, **caractérisé en ce que** le dispositif d'alimentation (2) est formé par un convoyeur à bande (8) ou une chaîne de réceptacles suspendue ou un tapis de soutirage.

3. Dispositif selon la revendication 1 ou la revendication 2, **caractérisé en ce que** le support de réceptacle de tassement (42) est formé par un levier pivotant (10) monté pivotant autour d'un axe horizontal (11) dans le bâti (1), ledit levier supportant de manière articulée le réceptacle de tassement (6) à l'une de ses extrémités et étant entraîné à son autre extrémité selon un mouvement pivotant de va-et-vient autour de l'axe horizontal (11).

4. Dispositif selon la revendication 3, **caractérisé en ce que** l'extrémité inférieure du levier pivotant (10) est articulée sur une extrémité d'une patte (13) dont l'autre extrémité est articulée sur une goupille excentrique (14) entraînée par un moteur (18) fixé au bâti (1).

5. Dispositif selon l'une quelconque des revendications 1 à 4, **caractérisé en ce que** le support de réceptacle de tassement (42) supporte également un moteur (43) d'entraînement en rotation du réceptacle de tassement (6).

6. Dispositif selon la revendication 5, **caractérisé en ce que** l'arbre de sortie du moteur (43) est agencé coaxialement à l'axe de rotation (41) du réceptacle de tassement (6), éventuellement par l'intermédiaire d'un jeu d'engrenages (44).

7. Dispositif selon l'une quelconque des revendications 1 à 6, **caractérisé en ce que** le réceptacle de tassement (6) présente une pluralité d'évidements (5), lesdits évidements étant décalés les uns par rapport aux autres dans la direction circonférentielle du réceptacle de tassement (6), de préférence d'un angle identique.

8. Dispositif selon la revendication 7, **caractérisé en ce que** les évidements (5) peuvent avoir des formes et/ou des dimensions différentes.

9. Dispositif selon l'une quelconque des revendications 1 à 8, **caractérisé en ce que** le réceptacle de tassement (6) supporte des rangées d'évidements (5) orientées selon sa direction longitudinale.

10. Dispositif selon l'une quelconque des revendications 1 à 9, **caractérisé en ce que** le réceptacle de tassement (6) forme un composant facilement interchangeable.

11. Dispositif selon l'une quelconque des revendications 1 à 10, **caractérisé en ce que** plusieurs outils différents les uns des autres sont montés sur un raccordement d'outil commun (22), par exemple une tête revolver.

12. Dispositif selon l'une quelconque des revendications 1 à 11, **caractérisé en ce que** chaque outil forme un composant facilement interchangeable.
